# EUROPÄISCHE PATENTANMELDUNG

(11) **EP 3 876 322 A2**
(43) Veröffentlichungstag der Anmeldung: **08.09.2021**
(21) Anmeldenummer: 21160859.1
(22) Anmeldetag: 05.03.2021
(51) Int. Cl.: H01M 8/04089, H01M 8/04291, H01M 8/04537, H01M 8/04746

(54) **BRENNSTOFFZELLENVORRICHTUNG**

(30) Priorität: 06.03.2020 DE 102020202888
(71) Anmelder: Robert Bosch GmbH, 70442 Stuttgart (DE)
(72) Erfinder: Kerkamm, Ingo, 70565 Stuttgart (DE); Njodzefon, Jean-Claude, 71272 Renningen (DE)

(57) **Zusammenfassung**

Die Erfindung geht aus von einer Brennstoffzellenvorrichtung, insbesondere von einer Festoxidbrennstoffzellenvorrichtung, mit zumindest einer Zelleinheit (12) zu einer Gewinnung von elektrischer Energie aus zumindest einem Brennstoff, insbesondere zumindest einem Brenngas, mit zumindest einer Elektrosensoreinheit (14), insbesondere zumindest einer Widerstandssensoreinheit, die dazu eingerichtet ist, zumindest eine elektrische Kenngröße, insbesondere einen elektrischen Gleichstromwiderstand, der Zelleinheit (12) zu erfassen, und mit zumindest einer Steuer- und/oder Regeleinheit (16), die dazu eingerichtet ist, zumindest teilautomatisch Betriebsparameter der Zelleinheit (12) einzustellen.

Es wird vorgeschlagen, dass die Steuer- und/oder Regeleinheit (16) dazu eingerichtet ist, in Abhängigkeit von einer, insbesondere von der Elektrosensoreinheit (14) erfassten, Änderung der elektrischen Kenngröße einen Brennwert des Brennstoffs zu ermitteln.

## Beschreibung

### Brennstoffzellenvorrichtung

### Stand der Technik

Es ist bereits eine Brennstoffzellenvorrichtung, insbesondere eine Festoxidbrennstoffzellenvorrichtung, mit zumindest einer Zelleinheit zu einer Gewinnung von elektrischer Energie aus zumindest einem Brennstoff, insbesondere zumindest einem Brenngas, mit zumindest einer Elektrosensoreinheit, insbesondere zumindest einer Widerstandssensoreinheit, die dazu eingerichtet ist, zumindest eine elektrische Kenngröße, insbesondere einen elektrischen Gleichstromwiderstand, der Zelleinheit zu , und mit zumindest einer Steuer- und/oder Regeleinheit, die dazu eingerichtet ist, zumindest teilautomatisch Betriebsparameter der Zelleinheit einzustellen, vorgeschlagen worden.

### Offenbarung der Erfindung

Die Erfindung geht aus von einer Brennstoffzellenvorrichtung, insbesondere von einer Festoxidbrennstoffzellenvorrichtung, mit zumindest einer Zelleinheit zu einer Gewinnung von elektrischer Energie aus zumindest einem Brennstoff, insbesondere zumindest einem Brenngas, mit zumindest einer Elektrosensoreinheit, insbesondere zumindest einer Widerstandssensoreinheit, die dazu eingerichtet ist, zumindest eine elektrische Kenngröße, insbesondere einen elektrischen Gleichstromwiderstand, der Zelleinheit zu erfassen, und mit zumindest einer Steuer- und/oder Regeleinheit, die dazu eingerichtet ist, zumindest teilautomatisch Betriebsparameter der Zelleinheit einzustellen.

Es wird vorgeschlagen, dass die Steuer- und/oder Regeleinheit dazu eingerichtet ist, in Abhängigkeit von einer, insbesondere von der Elektrosensoreinheit erfassten, Änderung der elektrischen Kenngröße einen Brennwert des Brennstoffs zu ermitteln.

Vorzugsweise ist die Brennstoffzellenvorrichtung als eine Brennstoffzelle, insbesondere als eine Festoxidbrennstoffzelle, oder als ein Brennstoffzellen-Stack, insbesondere als ein Festoxidbrennstoffzellen-Stack, umfassend eine Mehrzahl von Brennstoffzellen, insbesondere Festoxidbrennstoffzellen, ausgebildet. Insbesondere ist die Brennstoffzellenvorrichtung als eine Hochtemperatur-Brennstoffzellenvorrichtung ausgebildet. Insbesondere weist die Brennstoffzellenvorrichtung eine Betriebstemperatur von zumindest 500° C auf. Die Zelleinheit ist insbesondere dazu vorgesehen, zu einer Gewinnung von elektrischer Energie eine chemische Reaktion des zumindest einen Brennstoffs mit einem Sauerstoff durchzuführen. Vorzugsweise weist die Zelleinheit zumindest ein lonenleitungselement, insbesondere einen Elektrolyten, auf. Insbesondere ist das lonenleitungselement als ein Festkörper ausgebildet. Bevorzugt ist das lonenleitungselement aus einer Keramik ausgebildet, die insbesondere dazu vorgesehen ist, Sauerstoffionen zu leiten, und für Elektronen undurchlässig ist. Vorzugsweise weist die Zelleinheit zumindest eine elektrisch positiv geladene Elektrode, insbesondere eine Anode, und zumindest eine elektrisch negativ geladene Elektrode, insbesondere eine Kathode, auf. Insbesondere sind die Anode und die Kathode auf voneinander abgewandten Seiten des lonenleitungselements angeordnet, insbesondere durch das lonenleitungselement räumlich voneinander getrennt. Insbesondere weist die Brennstoffzellenvorrichtung zumindest eine Brennstoffleitung auf, die dazu vorgesehen ist, der Anode den zumindest einen Brennstoff zuzuführen. Insbesondere weist die Brennstoffzellenvorrichtung zumindest eine Sauerstoffleitung auf, die dazu vorgesehen ist, der Kathode Sauerstoff zuzuführen. Vorzugsweise sind die Anode und die Kathode elektrisch leitend miteinander verbunden.

Insbesondere können, insbesondere elektrisch negativ geladene, Sauerstoffionen von der Kathode durch das lonenleitungselement zu der Anode fließen. Insbesondere können die Sauerstoffionen an der Anode mit, insbesondere elektrisch positiv geladenen, Brennstoffionen, insbesondere Wasserstoffionen, in einer chemischen Reaktion, insbesondere in einer Redoxreaktion, reagieren. Insbesondere entsteht durch das Fließen von Ionen durch das lonenleitungselement und durch die chemische Reaktion eine elektrische Potentialdifferenz, insbesondere eine elektrische Spannung, zwischen der Anode und der Kathode. Insbesondere kann in Abhängigkeit von der elektrischen Spannung zwischen der Anode und der Kathode ein elektrischer Strom, insbesondere ein elektrischer Gleichstrom, zwischen den elektrisch leitend miteinander verbundenen Anode und Kathode fließen. Vorzugsweise kann die Brennstoffzellenvorrichtung, insbesondere eine als ein Brennstoffzellen-Stack ausgebildete Brennstoffzellenvorrichtung, eine Mehrzahl von, insbesondere elektrisch miteinander verschalteten, Zelleinheiten aufweisen. Unter "vorgesehen" soll insbesondere speziell ausgestattet und/oder speziell eingerichtet verstanden werden. Unter "eingerichtet" soll insbesondere speziell programmiert und/oder speziell ausgelegt verstanden werden. Darunter, dass ein Objekt zu einer bestimmten Funktion vorgesehen oder eingerichtet ist, soll insbesondere verstanden werden, dass das Objekt diese bestimmte Funktion in zumindest einem Anwendungs- und/oder Betriebszustand erfüllt und/oder ausführt.

Der Brennstoff ist bevorzugt als ein Brenngas, insbesondere als ein Erdgas, als ein Wasserstoff, als ein Methan o. dgl., ausgebildet. Die Elektrosensoreinheit ist bevorzugt als eine Widerstandssensoreinheit ausgebildet. Insbesondere ist die elektrische Kenngröße der Zelleinheit als ein elektrischer Gleichstromwiderstand der Zelleinheit ausgebildet, der von der als Widerstandssensoreinheit ausgebildeten Elektrosensoreinheit direkt erfassbar und/oder ermittelbar ist. Alternativ oder zusätzlich ist vorstellbar, dass die elektrische Kenngröße der Zelleinheit als eine elektrische Spannung, insbesondere eine elektrische Gleichspannung, der Zelleinheit oder als eine elektrische Stromstärke, insbesondere eine elektrische Gleichstromstärke, der Zelleinheit ausgebildet ist. Insbesondere ist denkbar, dass die Elektrosensoreinheit alternativ oder zusätzlich als eine Spannungssensoreinheit und/oder als eine Stromsensoreinheit ausgebildet ist. Unter einer "Steuerund/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Die Steuer- und/oder Regeleinheit ist insbesondere dazu eingerichtet, zumindest teilautomatisch, bevorzugt vollautomatisch, Betriebsparameter der Zelleinheit, wie beispielsweise einen Volumenstrom des Brennstoffs durch die Zelleinheit, einen Volumenstrom des Sauerstoffs durch die Zelleinheit, eine Brennstoffausnutzung der Zelleinheit, eine Betriebstemperatur der Zelleinheit o. dgl., einzustellen.

Vorzugsweise ist die Steuer- und/oder Regeleinheit signalübertragungstechnisch, insbesondere elektrisch, mit der Elektrosensoreinheit verbunden. Insbesondere ist die Elektrosensoreinheit dazu eingerichtet, der Steuer- und/oder Regeleinheit einen aktuellen Wert der erfassten elektrischen Kenngröße bereitzustellen, insbesondere kontinuierlich oder intervallweise. Vorzugsweise ist die Steuerund/oder Regeleinheit dazu eingerichtet, einen Wert einer aktuell erfassten elektrischen Kenngröße mit einem Wert einer zeitlich zuvor erfassten elektrischen Kenngröße zu vergleichen. Insbesondere ist die Steuer- und/oder Regeleinheit dazu eingerichtet, in Abhängigkeit von einer Änderung der elektrischen Kenngröße, insbesondere des Werts der aktuell erfassten elektrischen Kenngröße gegenüber der zeitlich zuvor erfassten elektrischen Kenngröße, den Brennwert des Brennstoffs zu ermitteln, insbesondere zu berechnen. Der Brennwert des Brennstoffs ist insbesondere ein Maß für eine in dem Brennstoff enthaltene chemisch gebundene Energie je Bemessungseinheit, beispielsweise Masse und/oder Volumen des Brennstoffs. Insbesondere enthält ein Brennstoff desto mehr chemisch gebundene Energie je Bemessungseinheit je höher ein Brennwert des Brennstoffs ist.

Insbesondere ist eine von der Zelleinheit gewonnene elektrische Energie, insbesondere eine elektrische Spannung der Zelleinheit, abhängig von dem Brennwert des Brennstoffs. Insbesondere ändert sich die elektrische Spannung der Zelleinheit in Abhängigkeit von einer Änderung des Brennwerts des Brennstoffs, insbesondere in Abhängigkeit von ansonsten gleichbleibenden Betriebsbedingungen der Zelleinheit. Insbesondere ist die elektrische Kenngröße, insbesondere der elektrische Gleichstromwiderstand, der Zelleinheit abhängig von der elektrischen Spannung der Zelleinheit. Insbesondere steigt die elektrische Spannung der Zelleinheit, insbesondere der elektrische Gleichstromwiderstand der Zelleinheit, in Abhängigkeit von einer Erhöhung des Brennwerts des Brennstoffs, insbesondere in Abhängigkeit von ansonsten gleichbleibenden Betriebsbedingungen der Zelleinheit. Insbesondere sinkt die elektrische Spannung der Zelleinheit, insbesondere der elektrische Gleichstromwiderstand der Zelleinheit, in Abhängigkeit von einer Reduzierung des Brennwerts des Brennstoffs, insbesondere in Abhängigkeit von ansonsten gleichbleibenden Betriebsbedingungen der Zelleinheit. Insbesondere können in der Speichereinheit der Steuer- und/oder Regeleinheit Kalibrierungsparameter hinterlegt sein, wobei die Steuer- und/oder Regeleinheit dazu eingerichtet sein kann, zu einer Ermittlung des Brennwerts die Änderung der elektrischen Kenngröße mit den Kalibrierungsparametern zu vergleichen.

Durch die erfindungsgemäße Ausgestaltung der Brennstoffzellenvorrichtung kann vorteilhaft analytisch ein Brennwert eines Brennstoffs ermittelt werden. Vorteilhaft kann auf eine aufwendige Sensorik zu einer direkten Erfassung des Brennwerts verzichtet werden. Vorteilhaft kann eine bauteil- und wartungsarme Brennstoffzellenvorrichtung bereitgestellt werden. Vorteilhaft kann automatisch auf Schwankungen einer Brennstoffqualität reagiert werden und ein effizienter Betrieb der Brennstoffzellenvorrichtung kann erreicht werden. Vorteilhaft kann eine nutzerkomfortabel und nutzersicher mit instabilen, insbesondere schwankungsanfälligen, Brennstoffversorgungsnetzen nutzbare Brennstoffzellenvorrichtung bereitgestellt werden.

Des Weiteren wird vorgeschlagen, dass die Steuer- und/oder Regeleinheit dazu eingerichtet ist, in Abhängigkeit von einer Korrelation der Änderung der elektrischen Kenngröße mit einer Modulation eines Volumenstroms des Brennstoffs durch die Zelleinheit, insbesondere durch die Brennstoffleitung, den Brennwert des Brennstoffs zu ermitteln. Der Volumenstrom des Brennstoffs ist insbesondere ein Maß für eine Menge, insbesondere für ein Volumen, des Brennstoffs, der durch eine Leitung, insbesondere durch die Brennstoffleitung, strömt. Insbesondere ist der Volumenstrom des Brennstoffs durch die Zelleinheit, insbesondere durch die Brennstoffleitung, desto größer je mehr Brennstoff durch die Zelleinheit, insbesondere durch die Brennstoffleitung, strömt. Die Modulation des Volumenstroms des Brennstoffs ist insbesondere eine Änderung, insbesondere eine Erhöhung oder eine Reduzierung, des Volumenstroms des Brennstoffs um einen vorgegebenen, insbesondere vorbestimmten oder einstellbaren, Wert, insbesondere für eine Dauer eines vorgegebenen Zeitintervalls. Insbesondere ist die Änderung der elektrischen Kenngröße abhängig von der Modulation des Volumenstroms des Brennstoffs durch die Zelleinheit, insbesondere von einer Modulationsart, beispielsweise einer sinusförmigen Modulation, einer dreiecksförmigen Modulation, einer trapezförmigen Modulation o. dgl. Insbesondere ist die elektrische Kenngröße abhängig von dem Volumenstrom des Brennstoffs durch die Zelleinheit und von dem Brennwert des Brennstoffs. Insbesondere ändert sich die elektrische Kenngröße in Abhängigkeit von einer Modulation eines Volumenstroms eines ersten Brennstoffs mit einem ersten Brennwert um einen vorgegebenen Wert mit einer anderen Stärke als in Abhängigkeit von einer Modulation eines Volumenstroms eines zweiten Brennstoffs mit einem zweiten, von dem ersten Brennwert verschiedenen Brennwert um den vorgegebenen Wert. Vorzugsweise ändert sich die elektrische Kenngröße in Abhängigkeit von einer Modulation eines Volumenstroms eines ersten Brennstoffs mit einem ersten Brennwert um einen vorgegebenen Wert stärker als in Abhängigkeit von einer Modulation eines Volumenstroms eines zweiten Brennstoffs mit einem zweiten Brennwert, der geringer ist als der erste Brennwert, um den vorgegebenen Wert. Insbesondere ist die Steuer- und/oder Regeleinheit dazu eingerichtet, zu einer Ermittlung des Brennwerts des Brennstoffs die Korrelation der Änderung der elektrischen Kenngröße mit der Modulation des Volumenstroms des Brennstoffs durch die Zelleinheit zu berücksichtigen. Vorteilhaft kann eine besonders präzise Brennwertermittlung ermöglicht werden.

Ferner wird vorgeschlagen, dass die Brennstoffzellenvorrichtung zumindest eine Dosiereinheit umfasst, die dazu vorgesehen ist, einen Volumenstrom des Brennstoffs durch die Zelleinheit, insbesondere durch die Brennstoffleitung, einzustellen, wobei die Steuer- und/oder Regeleinheit dazu eingerichtet ist, die Dosiereinheit zu einer gezielten Modulation des Volumenstroms um einen vorgegebenen Wert anzusteuern. Insbesondere kann die Dosiereinheit dazu vorgesehen sein, den Volumenstrom des Brennstoffs durch die Zelleinheit, insbesondere durch die Brennstoffleitung, sinusförmig, dreiecksförmig, trapezförmig oder auf eine andere, einem Fachmann als sinnvoll erscheinende Art zu modulieren. Vorzugsweise ist die Dosiereinheit an der Brennstoffleitung oder an einer Brennstoffspeichereinheit der Brennstoffzellenvorrichtung angeordnet. Insbesondere kann die Dosiereinheit dazu vorgesehen sein, einen Volumenstrom durch die Zelleinheit, insbesondere durch die Brennstoffleitung, vollständig zu unterbinden, insbesondere die Brennstoffleitung vollständig zu schließen. Vorzugsweise ist die Dosiereinheit motorisch betätigbar, insbesondere in Abhängigkeit von einer Ansteuerung durch die Steuer- und/oder Regeleinheit. Die Dosiereinheit kann insbesondere als ein Ventil, als eine Pumpe, als eine gesteuerte Klappe oder als eine andere, einem Fachmann als sinnvoll erscheinende Dosiereinheit ausgebildet sein. Vorzugsweise ist die Steuer- und/oder Regeleinheit dazu eingerichtet, in Abhängigkeit von einer Änderung der elektrischen Kenngröße infolge der Modulation des Volumenstroms des Brennstoffs und in Abhängigkeit von der Modulation des Volumenstroms des Brennstoffs um den vorgegebenen Wert den Brennwert des Brennstoffs zu ermitteln. Vorzugsweise ist die Steuer- und/oder Regeleinheit dazu eingerichtet, die Dosiereinheit zu einer gezielten Modulation des Volumenstroms in Betriebspausen der Zelleinheit anzusteuern. Alternativ oder zusätzlich ist denkbar, dass die Steuer- und/oder Regeleinheit dazu eingerichtet ist, die Dosiereinheit zu einer gezielten Modulation des Volumenstroms um einen geringen vorgegebenen Wert und/oder mit einer hohen Modulationsfrequenz anzusteuern, wobei ein Betrieb der Zelleinheit durch die Modulation des Volumenstroms beeinträchtigungsfrei oder eine Leistung der Zelleinheit zumindest über einem Leistungsmindestwert bleibt. Insbesondere ist denkbar, dass eine Leistung der Zelleinheit zumindest während der Modulation des Volumenstroms von einer Normalbetriebsleistung zumindest um einen Wert erhöht wird, um den die Leistung der Zelleinheit in Abhängigkeit von der Modulation des Volumenstroms höchstens absinkt. Vorteilhaft kann eine gezielte Modulation des Volumenstroms des Brennstoffs und eine gezielte Ermittlung des Brennwerts des Brennstoffs ermöglicht werden.

Weiterhin wird vorgeschlagen, dass die Steuer- und/oder Regeleinheit dazu eingerichtet ist, die Änderung der elektrischen Kenngröße in Abhängigkeit von der gezielten Modulation des Volumenstroms zu einer Ermittlung des Brennwerts des Brennstoffs mit Kalibrierungsparametern, insbesondere mit Kalibrierungskurven, zu vergleichen. Die Kalibrierungsparameter, insbesondere die Kalibrierungskurven, sind vorzugsweise in der Speichereinheit der Steuer- und/oder Regeleinheit hinterlegt. Alternativ oder zusätzlich ist denkbar, dass die Kalibrierungsparameter separat von der Brennstoffzellenvorrichtung, beispielsweise auf einem Cloud-Server, hinterlegt sind und dass die Brennstoffzellenvorrichtung insbesondere eine Kommunikationseinheit aufweist, über die die Steuer- und/oder Regeleinheit auf die Kalibrierungsparameter zugreifen kann. Insbesondere beschreiben die Kalibrierungsparameter Änderungen der elektrischen Kenngröße in Abhängigkeit von unterschiedlichen Brennstoffen unterschiedlicher Brennwerte und in Abhängigkeit von Modulationen von Volumenströmen der Brennstoffe um unterschiedliche vorgegebene Werte. Insbesondere ist die Steuer- und/oder Regeleinheit dazu eingerichtet, zu einer Ermittlung des aktuellen Brennwerts des Brennstoffs einen in einem Kalibrierungsparameter hinterlegten Brennwert auszulesen, wobei der Kalibrierungsparameter den hinterlegten Brennwert in Abhängigkeit von einer Modulation des Volumenstroms um einen Wert, der einem Wert der aktuellen Modulation des Volumenstroms entspricht, und in Abhängigkeit von einer Änderung der elektrischen Kenngröße um einen Wert, der einem Wert der aktuellen Änderung der elektrischen Kenngröße entspricht, umfasst. Vorteilhaft kann eine effiziente, insbesondere rechenarme, Ermittlung des Brennwerts des Brennstoffs ermöglicht werden.

Zudem wird vorgeschlagen, dass die Steuer- und/oder Regeleinheit dazu eingerichtet ist, die Betriebsparameter der Zelleinheit in Abhängigkeit von dem ermittelten Brennwert des Brennstoffs einzustellen. Insbesondere ist die Steuerund/oder Regeleinheit dazu eingerichtet, zu einer Einstellung der Betriebsparameter der Zelleinheit Komponenten der Brennstoffzellenvorrichtung, beispielsweise die Brennstoffleitung, die Sauerstoffleitung, die Dosiereinheit, die Anode, die Kathode o. dgl., anzusteuern. Insbesondere ist die Steuer- und/oder Regeleinheit dazu eingerichtet, in Abhängigkeit von dem ermittelten Brennwert des Brennstoffs einen Volumenstrom des Brennstoffs durch die Zelleinheit und/oder einen Volumenstrom des Sauerstoffs durch die Zelleinheit einzustellen. Insbesondere können verschiedenen Brennwerten zugeordnete Soll-Betriebsparameter der Zelleinheit in der Speichereinheit der Steuer- und/oder Regeleinheit hinterlegt sein. Vorzugsweise ist die Steuer- und/oder Regeleinheit dazu eingerichtet, den ermittelten Brennwert mit den hinterlegten Brennwerten zu vergleichen und die Betriebsparameter der Zelleinheit auf die dem ermittelten Brennwert zugeordneten Soll-Betriebsparameter zu regeln. Es kann eine mit einem vorteilhaft hohen Wirkungsgrad und/oder mit verlängerter Lebensdauer betreibbare Brennstoffzellenvorrichtung bereitgestellt werden.

Des Weiteren wird vorgeschlagen, dass die Steuer- und/oder Regeleinheit dazu eingerichtet ist, zu einer Erstellung von Kalibrierungsparametern, insbesondere von Kalibrierungskurven, Korrelationen der Änderung der elektrischen Kenngröße mit einer Modulation eines Volumenstroms von Brennstoffen unterschiedlicher Brennwerte durch die Zelleinheit zu speichern. Insbesondere ist die Steuerund/oder Regeleinheit dazu eingerichtet, die Korrelationen der Änderung der elektrischen Kenngröße mit einer Modulation eines Volumenstroms von Brennstoffen unterschiedlicher Brennwerte durch die Zelleinheit in der Speichereinheit der Steuer- und/oder Regeleinheit zu speichern. Vorzugsweise ist die Steuerund/oder Regeleinheit dazu eingerichtet, die Kalibrierungsparameter zu ermitteln, insbesondere mittels einer Erfassung der Korrelationen der Änderung der elektrischen Kenngröße mit einer Modulation eines Volumenstroms von Brennstoffen unterschiedlicher Brennwerte durch die Zelleinheit. Alternativ oder zusätzlich ist denkbar, dass die Steuer- und/oder Regeleinheit dazu eingerichtet ist, die Korrelationen der Änderung der elektrischen Kenngröße mit einer Modulation eines Volumenstroms von Brennstoffen unterschiedlicher Brennwerte durch die Zelleinheit zu einer Speicherung zu empfangen, insbesondere über die Kommunikationseinheit von einem Cloud-Server, einem externen Speichermedium o. dgl., oder dass die Korrelationen der Änderung der elektrischen Kenngröße mit einer Modulation eines Volumenstroms von Brennstoffen unterschiedlicher Brennwerte durch die Zelleinheit während eines Herstellungsprozesses der Brennstoffzellenvorrichtung von der Steuer- und/oder Regeleinheit gespeichert werden. Vorteilhaft können Kalibrierungsparameter zu einer effizienten Ermittlung von Brennwerten erstellt werden.

Ferner wird vorgeschlagen, dass die Brennstoffzellenvorrichtung zumindest eine Durchflusssensoreinheit umfasst, die dazu eingerichtet ist, zumindest zur Erstellung der Kalibrierungsparameter den Volumenstrom durch die Zelleinheit, insbesondere in einem Betriebsbereich der Zelleinheit, zu erfassen. Vorzugsweise ist die Durchflusssensoreinheit dazu eingerichtet, den Volumenstrom des Brennstoffs durch die Brennstoffleitung zu erfassen. Insbesondere ist die Durchflusssensoreinheit signalübertragungstechnisch, insbesondere elektrisch, mit der Steuer- und/oder Regeleinheit verbunden. Die Durchflusssensoreinheit kann insbesondere als ein optischer Strömungssensor, als ein mechanischer Strömungssensor, als ein elektrischer Strömungssensor oder als ein anderer, einem Fachmann als sinnvoll erscheinender Strömungssensor ausgebildet sein. Unter einem "Betriebsbereich" der Zelleinheit soll insbesondere ein Bereich um einen Betriebspunkt der Zelleinheit mit einer Abweichung von höchstens 15 % von dem Betriebspunkt, bevorzugt von höchstens 10 % von dem Betriebspunkt und besonders bevorzugt von höchstens 5 % von dem Betriebspunkt verstanden werden. Insbesondere ist die Durchflusssensoreinheit dazu eingerichtet, eine Mehrzahl von unterschiedlichen Volumenströmen unterschiedlicher Brennstoffe mit unterschiedlichen Brennwerten zu erfassen. Vorzugsweise ist die Elektrosensoreinheit dazu eingerichtet, zur Erstellung der Kalibrierungsparameter eine Mehrzahl von unterschiedlichen Werten der elektrischen Kenngröße in Abhängigkeit von den unterschiedlichen Volumenströmen der unterschiedlichen Brennstoffe mit den unterschiedlichen Brennwerten zu erfassen. Insbesondere ist die Steuer- und/oder Regeleinheit dazu eingerichtet, die von der Durchflusssensoreinheit und von der Elektrosensoreinheit erfassten Werte zu einer Erstellung der Kalibrierungsparameter als Korrelationen der Änderung der elektrischen Kenngröße mit einer Modulation eines Volumenstroms von Brennstoffen unterschiedlicher Brennwerte durch die Zelleinheit zu speichern. Vorteilhaft können besonders genaue, insbesondere auf die jeweilige Brennstoffzellenvorrichtung abgestimmte, Kalibrierungsparameter bereitgestellt werden.

Weiterhin geht die Erfindung aus von einem Brennstoffzellensystem mit einer Mehrzahl von erfindungsgemäßen Brennstoffzellenvorrichtungen. Das Brennstoffzellensystem kann insbesondere als ein Brennstoffzellen-Stack mit einer Mehrzahl von als Brennstoffzellen ausgebildeten Brennstoffzellenvorrichtungen oder als eine Brennstoffzellenanlage mit einer Mehrzahl von als Brennstoffzellen-Stacks ausgebildeten Brennstoffzellenvorrichtungen ausgebildet sein. Vorzugsweise kann das Brennstoffzellensystem weitere, insbesondere einem Fachmann als sinnvoll erscheinende, Komponenten, wie beispielsweise zumindest einen Wärmetauscher, zumindest einen Reformer, zumindest einen Gleichstrom-Wechselstrom-Inverter o. dgl., umfassen. Vorteilhaft kann ein, insbesondere mit instabilen Brennstoffversorgungsnetzen, effizient betreibbares Brennstoffzellensystem bereitgestellt werden.

Zudem wird vorgeschlagen, dass die Steuer- und/oder Regeleinheiten der Brennstoffzellenvorrichtungen dazu eingerichtet sind, Modulationen von Volumenströmen des Brennstoffs in jeweils zwei Brennstoffzellenvorrichtungen gegenteilig zueinander einzustellen. Insbesondere sind die Steuer- und/oder Regeleinheiten der Brennstoffzellenvorrichtungen untereinander signalübertragungstechnisch, insbesondere elektrisch, verbunden. Alternativ ist vorstellbar, dass das Brennstoffzellensystem eine einzelne Steuer- und/oder Regeleinheit umfasst, die dazu eingerichtet ist, sämtliche Komponenten, insbesondere Zelleinheiten, der Brennstoffzellenvorrichtungen des Brennstoffzellensystems zu steuern und/oder zu regeln. Vorzugsweise ist eine Steuer- und/oder Regeleinheit einer ersten Brennstoffzellenvorrichtung dazu eingerichtet, zu einer Modulation eines Volumenstroms eines Brennstoffs durch die Zelleinheit der ersten Brennstoffzellenvorrichtung den Volumenstrom des Brennstoffs um einen vorgegebenen Wert zu erhöhen. Vorzugsweise ist eine Steuer- und/oder Regeleinheit einer zweiten Brennstoffzellenvorrichtung dazu eingerichtet, zu einer Modulation eines Volumenstroms des Brennstoffs durch eine Zelleinheit der zweiten Brennstoffzellenvorrichtung den Volumenstrom des Brennstoffs zu reduzieren, insbesondere um denselben vorgegebenen Wert. Vorteilhaft können elektrische Spannungsschwankungen des Brennstoffzellensystems aufgrund einer Modulation eines Volumenstroms ausgeglichen und unterbunden werden. Vorteilhaft kann ein besonders stabil, insbesondere spannungsschwankungsarm, betreibbares Brennstoffzellensystem bereitgestellt werden.

Des Weiteren geht die Erfindung aus von einem Verfahren zum Betrieb einer Brennstoffzellenvorrichtung, insbesondere einer erfindungsgemäßen Brennstoffzellenvorrichtung.

Es wird vorgeschlagen, dass in zumindest einem Verfahrensschritt in Abhängigkeit von einer Änderung zumindest einer elektrischen Kenngröße zumindest einer, insbesondere der vorgenannten, Zelleinheit der Brennstoffzellenvorrichtung ein Brennwert eines Brennstoffs ermittelt wird. Vorteilhaft kann ein Verfahren zu einem effizienten Betrieb der Brennstoffzellenvorrichtung bereitgestellt werden.

Die erfindungsgemäße Brennstoffzellenvorrichtung, das erfindungsgemäße Brennstoffzellensystem und/oder das erfindungsgemäße Verfahren sollen/soll hierbei nicht auf die oben beschriebene Anwendung und Ausführungsform beschränkt sein. Insbesondere können/kann die erfindungsgemäße Brennstoffzellenvorrichtung, das erfindungsgemäße Brennstoffzellensystem und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Brennstoffzellensystem in einer schematischen perspektivischen Darstellung,
- Fig. 2: eine Schnittansicht einer erfindungsgemäßen Brennstoffzellenvorrichtung des erfindungsgemäßen Brennstoffzellensystems aus Fig. 1 in einer schematischen Darstellung,
- Fig. 3: ein Diagramm zur Illustration eines Einflusses unterschiedlicher Brennwerte auf eine elektrische Kenngröße in einer schematischen Darstellung,
- Fig. 4: ein Diagramm zur Illustration der elektrischen Kenngröße in einer schematischen Darstellung und
- Fig. 5: ein Diagramm zur Illustration eines Einflusses unterschiedlicher Volumenströme eines Brennstoffs auf die elektrische Kenngröße in einer schematischen Darstellung.

### Beschreibung des Ausführungsbeispiels

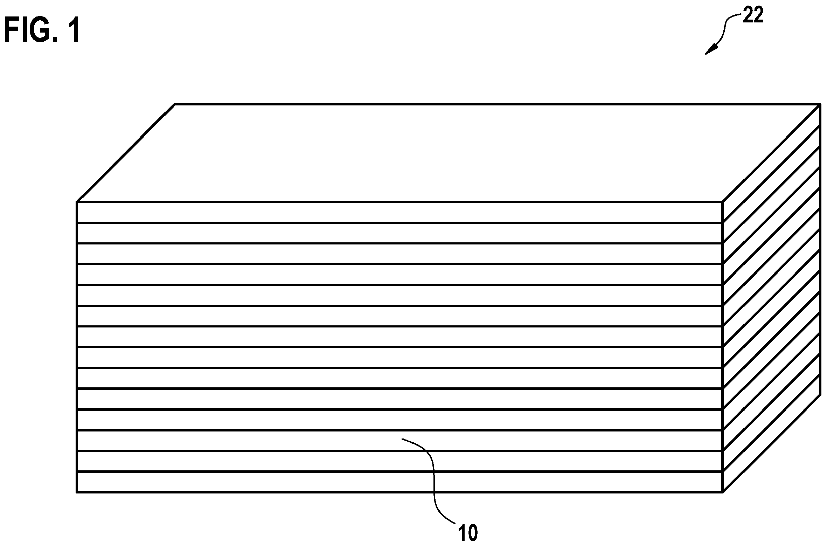

Figur 1 zeigt ein Brennstoffzellensystem 22 in einer schematischen perspektivischen Darstellung. Das Brennstoffzellensystem 22 umfasst eine Mehrzahl von Brennstoffzellenvorrichtungen 10. Das Brennstoffzellensystem 22 kann insbesondere als ein Brennstoffzellen-Stack mit einer Mehrzahl von als Brennstoffzellen ausgebildeten Brennstoffzellenvorrichtungen 10 oder als eine Brennstoffzellenanlage mit einer Mehrzahl von als Brennstoffzellen-Stacks ausgebildeten Brennstoffzellenvorrichtungen 10 ausgebildet sein. Vorzugsweise kann das Brennstoffzellensystem 22 weitere, insbesondere einem Fachmann als sinnvoll erscheinende, Komponenten, wie beispielsweise zumindest einen Wärmetauscher, zumindest einen Reformer, zumindest einen Gleichstrom-Wechselstrom-Inverter o. dgl. umfassen (hier nicht dargestellt).

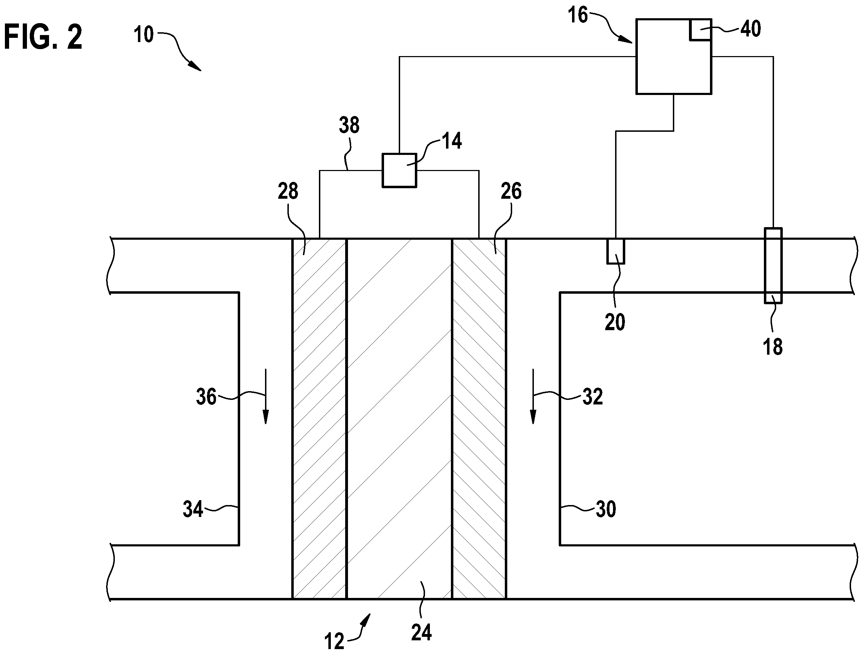

Figur 2 zeigt eine Schnittansicht einer Brennstoffzellenvorrichtung 10, insbesondere einer Festoxidbrennstoffzellenvorrichtung, des Brennstoffzellensystems 22 aus Figur 1 in einer schematischen Darstellung. Vorzugsweise umfasst die Brennstoffzellenvorrichtung 10 zumindest eine Zelleinheit 12 zu einer Gewinnung von elektrischer Energie aus zumindest einem Brennstoff, insbesondere zumindest einem Brenngas, zumindest eine Elektrosensoreinheit 14, insbesondere zumindest eine Widerstandssensoreinheit, die dazu eingerichtet ist, zumindest eine elektrische Kenngröße, insbesondere einen elektrischen Gleichstromwiderstand, der Zelleinheit 12 zu erfassen, und zumindest eine Steuer- und/oder Regeleinheit 16, die dazu eingerichtet ist, zumindest teilautomatisch Betriebsparameter der Zelleinheit 12 einzustellen. Bevorzugt ist die Steuer- und/oder Regeleinheit 16 dazu eingerichtet, in Abhängigkeit von einer, insbesondere von der Elektrosensoreinheit 14 erfassten, Änderung der elektrischen Kenngröße einen Brennwert des Brennstoffs zu ermitteln.

Vorzugsweise ist die Brennstoffzellenvorrichtung 10 als eine Brennstoffzelle, insbesondere als eine Festoxidbrennstoffzelle, oder als ein Brennstoffzellen-Stack, insbesondere als ein Festoxidbrennstoffzellen-Stack, umfassend eine Mehrzahl von Brennstoffzellen, insbesondere Festoxidbrennstoffzellen, ausgebildet. Insbesondere ist die Brennstoffzellenvorrichtung 10 als eine Hochtemperatur-Brennstoffzellenvorrichtung ausgebildet. Insbesondere weist die Brennstoffzellenvorrichtung 10 eine Betriebstemperatur von zumindest 500° C auf. Die Zelleinheit 12 ist insbesondere dazu vorgesehen, zu einer Gewinnung von elektrischer Energie eine chemische Reaktion des zumindest einen Brennstoffs mit einem Sauerstoff durchzuführen. Vorzugsweise weist die Zelleinheit 12 zumindest ein lonenleitungselement 24, insbesondere einen Elektrolyten, auf. Insbesondere ist das lonenleitungselement 24 als ein Festkörper ausgebildet. Bevorzugt ist das lonenleitungselement 24 aus einer Keramik ausgebildet, die insbesondere dazu vorgesehen ist, Sauerstoffionen zu leiten, und für Elektronen undurchlässig ist. Vorzugsweise weist die Zelleinheit 12 zumindest eine elektrisch positiv geladene Elektrode, insbesondere eine Anode 26, und zumindest eine elektrisch negativ geladene Elektrode, insbesondere eine Kathode 28, auf. Insbesondere sind die Anode 26 und die Kathode 28 auf voneinander abgewandten Seiten des lonenleitungselements 24 angeordnet, insbesondere durch das lonenleitungselement 24 räumlich voneinander getrennt. Insbesondere weist die Brennstoffzellenvorrichtung 10 zumindest eine Brennstoffleitung 30 auf, die dazu vorgesehen ist, der Anode 26 den zumindest einen Brennstoff zuzuführen. Eine Strömungsrichtung des Brennstoffs durch die Brennstoffleitung 30 ist in Figur 2 insbesondere mittels eines ersten Pfeils 32 illustriert. Insbesondere weist die Brennstoffzellenvorrichtung 10 zumindest eine Sauerstoffleitung 34 auf, die dazu vorgesehen ist, der Kathode 28 Sauerstoff zuzuführen. Ein Strömungsrichtung des Sauerstoffs durch die Sauerstoffleitung 34 ist in Figur 2 insbesondere mittels eines zweiten Pfeils 36 illustriert. Vorzugsweise sind die Anode 26 und die Kathode 28 elektrisch leitend miteinander verbunden, insbesondere über ein elektrisches Leitungselement 38 der Brennstoffzellenvorrichtung 10.

Insbesondere können, insbesondere elektrisch negativ geladene, Sauerstoffionen von der Kathode 28 durch das lonenleitungselement 24 zu der Anode 26 fließen. Insbesondere können die Sauerstoffionen an der Anode 26 mit, insbesondere elektrisch positiv geladenen, Brennstoffionen, insbesondere Wasserstoffionen, in einer chemischen Reaktion, insbesondere in einer Redoxreaktion, reagieren. Insbesondere entsteht durch das Fließen von Ionen durch das lonenleitungselement 24 und durch die chemische Reaktion eine elektrische Potentialdifferenz, insbesondere eine elektrische Spannung, zwischen der Anode 26 und der Kathode 28. Insbesondere kann in Abhängigkeit von der elektrischen Spannung zwischen der Anode 26 und der Kathode 28 ein elektrischer Strom, insbesondere ein elektrischer Gleichstrom, zwischen den elektrisch leitend miteinander verbundenen Anode 26 und Kathode 28 fließen. Vorzugsweise kann die Brennstoffzellenvorrichtung 10, insbesondere eine als ein Brennstoffzellen-Stack ausgebildete Brennstoffzellenvorrichtung 10, eine Mehrzahl von, insbesondere elektrisch miteinander verschalteten, Zelleinheiten 12 aufweisen. In Figur 2 ist der Übersichtlichkeit halber eine einzelne Zelleinheit 12 dargestellt.

Der Brennstoff ist bevorzugt als ein Brenngas, insbesondere als ein Erdgas, als ein Wasserstoff, als ein Methan o. dgl., ausgebildet. Die Elektrosensoreinheit 14 ist bevorzugt als eine Widerstandssensoreinheit ausgebildet. Insbesondere ist die elektrische Kenngröße der Zelleinheit 12 als ein elektrischer Gleichstromwiderstand der Zelleinheit 12 ausgebildet, der von der als Widerstandssensoreinheit ausgebildeten Elektrosensoreinheit 14 direkt erfassbar und/oder ermittelbar ist. Alternativ oder zusätzlich ist vorstellbar, dass die elektrische Kenngröße der Zelleinheit 12 als eine elektrische Spannung, insbesondere eine elektrische Gleichspannung, der Zelleinheit 12 oder als eine elektrische Stromstärke, insbesondere eine elektrische Gleichstromstärke, der Zelleinheit 12 ausgebildet ist. Insbesondere ist denkbar, dass die Elektrosensoreinheit 14 alternativ oder zusätzlich als eine Spannungssensoreinheit und/oder als eine Stromsensoreinheit ausgebildet ist. Die Steuer- und/oder Regeleinheit 16 ist insbesondere dazu eingerichtet, zumindest teilautomatisch, bevorzugt vollautomatisch, Betriebsparameter der Zelleinheit 12, wie beispielsweise einen Volumenstrom des Brennstoffs durch die Zelleinheit 12, einen Volumenstrom des Sauerstoffs durch die Zelleinheit 12, eine Brennstoffausnutzung der Zelleinheit 12, eine Betriebstemperatur der Zelleinheit 12 o. dgl., einzustellen.

Vorzugsweise ist die Steuer- und/oder Regeleinheit 16 signalübertragungstechnisch, insbesondere elektrisch, mit der Elektrosensoreinheit 14 verbunden. Insbesondere ist die Elektrosensoreinheit 14 dazu eingerichtet, der Steuer- und/oder Regeleinheit 16 einen aktuellen Wert der erfassten elektrischen Kenngröße bereitzustellen, insbesondere kontinuierlich oder intervallweise. Vorzugsweise ist die Steuer- und/oder Regeleinheit 16 dazu eingerichtet, einen Wert einer aktuell erfassten elektrischen Kenngröße mit einem Wert einer zeitlich zuvor erfassten elektrischen Kenngröße zu vergleichen. Insbesondere ist die Steuer- und/oder Regeleinheit 16 dazu eingerichtet, in Abhängigkeit von einer Änderung der elektrischen Kenngröße, insbesondere des Werts der aktuell erfassten elektrischen Kenngröße gegenüber dem Wert der zeitlich zuvor erfassten elektrischen Kenngröße, den Brennwert des Brennstoffs zu ermitteln, insbesondere zu berechnen. Der Brennwert des Brennstoffs ist insbesondere ein Maß für eine in dem Brennstoff enthaltene chemisch gebundene Energie je Bemessungseinheit, beispielsweise Masse und/oder Volumen des Brennstoffs. Insbesondere enthält ein Brennstoff desto mehr chemisch gebundene Energie je Bemessungseinheit je höher ein Brennwert des Brennstoffs ist.

Insbesondere ist eine von der Zelleinheit 12 gewonnene elektrische Energie, insbesondere eine elektrische Spannung der Zelleinheit 12, abhängig von dem Brennwert des Brennstoffs. Insbesondere ändert sich die elektrische Spannung der Zelleinheit 12 in Abhängigkeit von einer Änderung des Brennwerts des Brennstoffs, insbesondere in Abhängigkeit von ansonsten gleichbleibenden Betriebsbedingungen der Zelleinheit 12. Insbesondere ist die elektrische Kenngröße, insbesondere der elektrische Gleichstromwiderstand, der Zelleinheit 12 abhängig von der elektrischen Spannung der Zelleinheit 12. Insbesondere steigt die elektrische Spannung der Zelleinheit 12, insbesondere der elektrische Gleichstromwiderstand der Zelleinheit 12, in Abhängigkeit von einer Erhöhung des Brennwerts des Brennstoffs, insbesondere in Abhängigkeit von ansonsten gleichbleibenden Betriebsbedingungen der Zelleinheit 12. Insbesondere sinkt die elektrische Spannung der Zelleinheit 12, insbesondere der elektrische Gleichstromwiderstand der Zelleinheit 12, in Abhängigkeit von einer Reduzierung des Brennwerts des Brennstoffs, insbesondere in Abhängigkeit von ansonsten gleichbleibenden Betriebsbedingungen der Zelleinheit 12. Insbesondere können in einer Speichereinheit 40 der Steuer- und/oder Regeleinheit 16 Kalibrierungsparameter hinterlegt sein, wobei die Steuer- und/oder Regeleinheit 16 dazu eingerichtet sein kann, zu einer Ermittlung des Brennwerts die Änderung der elektrischen Kenngröße mit den Kalibrierungsparametern zu vergleichen.

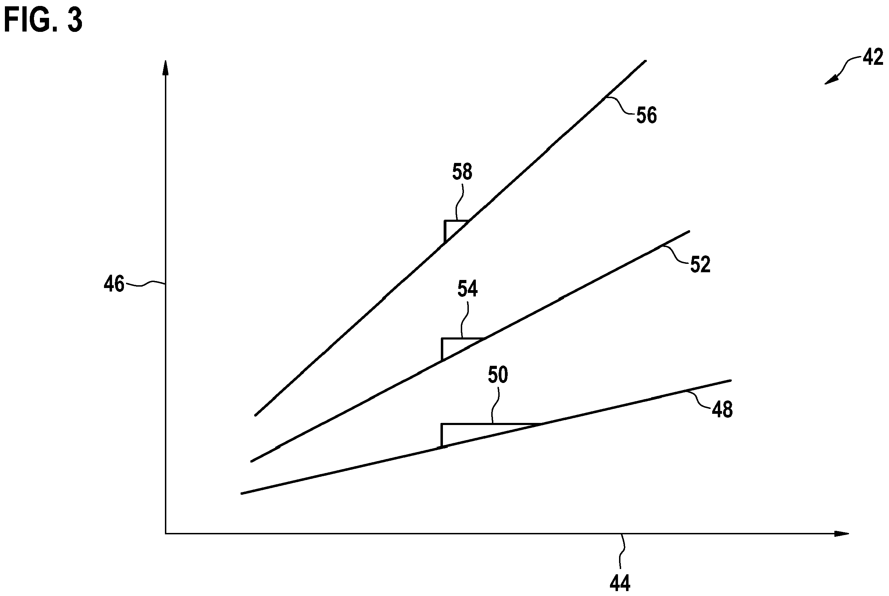

Bevorzugt ist die Steuer- und/oder Regeleinheit 16 dazu eingerichtet, in Abhängigkeit von einer Korrelation der Änderung der elektrischen Kenngröße mit einer Modulation eines Volumenstroms des Brennstoffs durch die Zelleinheit 12, insbesondere durch die Brennstoffleitung 30, den Brennwert des Brennstoffs zu ermitteln. Der Volumenstrom des Brennstoffs ist insbesondere ein Maß für eine Menge, insbesondere für ein Volumen, des Brennstoffs, der durch eine Leitung, insbesondere durch die Brennstoffleitung 30, strömt. Insbesondere ist der Volumenstrom des Brennstoffs durch die Zelleinheit 12, insbesondere durch die Brennstoffleitung 30, desto größer je mehr Brennstoff durch die Zelleinheit 12, insbesondere durch die Brennstoffleitung 30, strömt. Die Modulation des Volumenstroms des Brennstoffs ist insbesondere eine Änderung, insbesondere eine Erhöhung oder eine Reduzierung, des Volumenstroms des Brennstoffs um einen vorgegebenen, insbesondere vorbestimmten oder einstellbaren, Wert, insbesondere für eine Dauer eines vorgegebenen Zeitintervalls. Insbesondere ist die Änderung der elektrischen Kenngröße abhängig von der Modulation des Volumenstroms des Brennstoffs durch die Zelleinheit 12, insbesondere von einer Modulationsart, beispielsweise einer sinusförmigen Modulation, einer dreiecksförmigen Modulation, einer trapezförmigen Modulation o. dgl. Insbesondere ist die elektrische Kenngröße abhängig von dem Volumenstrom des Brennstoffs durch die Zelleinheit 12 und von dem Brennwert des Brennstoffs. Insbesondere ändert sich die elektrische Kenngröße in Abhängigkeit von einer Modulation eines Volumenstroms eines ersten Brennstoffs mit einem ersten Brennwert um einen vorgegebenen Wert mit einer anderen Stärke als in Abhängigkeit von einer Modulation eines Volumenstroms eines zweiten Brennstoffs mit einem zweiten, von dem ersten Brennwert verschiedenen Brennwert um den vorgegebenen Wert. Vorzugsweise ändert sich die elektrische Kenngröße in Abhängigkeit von einer Modulation eines Volumenstroms eines ersten Brennstoffs mit einem ersten Brennwert um einen vorgegebenen Wert stärker als in Abhängigkeit von einer Modulation eines Volumenstroms eines zweiten Brennstoffs mit einem zweiten Brennwert, der geringer ist als der erste Brennwert, um den vorgegebenen Wert (vgl. Figur 3). Insbesondere ist die Steuer- und/oder Regeleinheit 16 dazu eingerichtet, zu einer Ermittlung des Brennwerts des Brennstoffs die Korrelation der Änderung der elektrischen Kenngröße mit der Modulation des Volumenstroms des Brennstoffs durch die Zelleinheit 12 zu berücksichtigen.

Bevorzugt umfasst die Brennstoffzellenvorrichtung 10 zumindest eine Dosiereinheit 18, die dazu vorgesehen ist, einen Volumenstrom des Brennstoffs durch die Zelleinheit 12, insbesondere durch die Brennstoffleitung 30, einzustellen, wobei die Steuer- und/oder Regeleinheit 16 dazu eingerichtet ist, die Dosiereinheit 18 zu einer gezielten Modulation des Volumenstroms um einen vorgegebenen Wert anzusteuern. Insbesondere kann die Dosiereinheit 18 dazu vorgesehen sein, den Volumenstrom des Brennstoffs durch die Zelleinheit 12, insbesondere durch die Brennstoffleitung 30, sinusförmig, dreiecksförmig, trapezförmig oder auf eine andere, einem Fachmann als sinnvoll erscheinende Art zu modulieren. Vorzugsweise ist die Dosiereinheit 18 an der Brennstoffleitung 30, wie beispielhaft im vorliegenden Ausführungsbeispiel, oder an einer Brennstoffspeichereinheit der Brennstoffzellenvorrichtung 10 angeordnet. Insbesondere kann die Dosiereinheit 18 dazu vorgesehen sein, einen Volumenstrom durch die Zelleinheit 12, insbesondere durch die Brennstoffleitung 30, vollständig zu unterbinden, insbesondere die Brennstoffleitung 30 vollständig zu schließen. Vorzugsweise ist die Dosiereinheit 18 motorisch betätigbar, insbesondere in Abhängigkeit von einer Ansteuerung durch die Steuer- und/oder Regeleinheit 16. Die Dosiereinheit 18 kann insbesondere als ein Ventil, als eine Pumpe, als eine gesteuerte Klappe oder als eine andere, einem Fachmann als sinnvoll erscheinende Dosiereinheit ausgebildet sein. Vorzugsweise ist die Steuer- und/oder Regeleinheit 16 dazu eingerichtet, in Abhängigkeit von einer Änderung der elektrischen Kenngröße infolge der Modulation des Volumenstroms des Brennstoffs und in Abhängigkeit von der Modulation des Volumenstroms des Brennstoffs um den vorgegebenen Wert den Brennwert des Brennstoffs zu ermitteln. Vorzugsweise ist die Steuer- und/oder Regeleinheit 16 dazu eingerichtet, die Dosiereinheit 18 zu einer gezielten Modulation des Volumenstroms in Betriebspausen der Zelleinheit 12 anzusteuern. Alternativ oder zusätzlich ist denkbar, dass die Steuer- und/oder Regeleinheit 16 dazu eingerichtet ist, die Dosiereinheit 18 zu einer gezielten Modulation des Volumenstroms um einen geringen vorgegebenen Wert und/oder mit einer hohen Modulationsfrequenz anzusteuern, wobei ein Betrieb der Zelleinheit 12 durch die Modulation des Volumenstroms beeinträchtigungsfrei oder eine Leistung der Zelleinheit 12 zumindest über einem Leistungsmindestwert bleibt. Insbesondere ist denkbar, dass eine Leistung der Zelleinheit 12 zumindest während der Modulation des Volumenstroms von einer Normalbetriebsleistung zumindest um einen Wert erhöht wird, um den die Leistung der Zelleinheit 12 in Abhängigkeit von der Modulation des Volumenstroms höchstens absinkt.

Bevorzugt ist die Steuer- und/oder Regeleinheit 16 dazu eingerichtet, die Änderung der elektrischen Kenngröße in Abhängigkeit von der gezielten Modulation des Volumenstroms zu einer Ermittlung des Brennwerts des Brennstoffs mit Kalibrierungsparametern, insbesondere mit Kalibrierungskurven, zu vergleichen. Die Kalibrierungsparameter, insbesondere die Kalibrierungskurven, sind vorzugsweise in der Speichereinheit 40 der Steuer- und/oder Regeleinheit 16 hinterlegt. Alternativ oder zusätzlich ist denkbar, dass die Kalibrierungsparameter separat von der Brennstoffzellenvorrichtung 10, beispielsweise auf einem Cloud-Server, hinterlegt sind und dass die Brennstoffzellenvorrichtung 10 insbesondere eine Kommunikationseinheit aufweist, über die die Steuer- und/oder Regeleinheit 16 auf die Kalibrierungsparameter zugreifen kann (hier nicht dargestellt). Insbesondere beschreiben die Kalibrierungsparameter Änderungen der elektrischen Kenngröße in Abhängigkeit von unterschiedlichen Brennstoffen unterschiedlicher Brennwerte und in Abhängigkeit von Modulationen von Volumenströmen der Brennstoffe um unterschiedliche vorgegebene Werte. Insbesondere ist die Steuer- und/oder Regeleinheit 16 dazu eingerichtet, zu einer Ermittlung des aktuellen Brennwerts des Brennstoffs einen in einem Kalibrierungsparameter hinterlegten Brennwert auszulesen, wobei der Kalibrierungsparameter den hinterlegten Brennwert in Abhängigkeit von einer Modulation des Volumenstroms um einen Wert, der einem Wert der aktuellen Modulation des Volumenstroms entspricht, und in Abhängigkeit von einer Änderung der elektrischen Kenngröße um einen Wert, der einem Wert der aktuellen Änderung der elektrischen Kenngröße entspricht, umfasst.

Bevorzugt ist die Steuer- und/oder Regeleinheit 16 dazu eingerichtet, die Betriebsparameter der Zelleinheit 12 in Abhängigkeit von dem ermittelten Brennwert des Brennstoffs einzustellen. Insbesondere ist die Steuer- und/oder Regeleinheit 16 dazu eingerichtet, zu einer Einstellung der Betriebsparameter der Zelleinheit 12 Komponenten der Brennstoffzellenvorrichtung 10, beispielsweise die Brennstoffleitung 30, die Sauerstoffleitung 34, die Dosiereinheit 18, die Anode 26, die Kathode 28 o. dgl., anzusteuern. Insbesondere ist die Steuer- und/oder Regeleinheit 16 dazu eingerichtet, in Abhängigkeit von dem ermittelten Brennwert des Brennstoffs einen Volumenstrom des Brennstoffs durch die Zelleinheit 12 und/oder einen Volumenstrom des Sauerstoffs durch die Zelleinheit 12 einzustellen. Insbesondere können verschiedenen Brennwerten zugeordnete Soll-Betriebsparameter der Zelleinheit 12 in der Speichereinheit 40 der Steuer-und/oder Regeleinheit 16 hinterlegt sein. Vorzugsweise ist die Steuer- und/oder Regeleinheit 16 dazu eingerichtet, den ermittelten Brennwert mit den hinterlegten Brennwerten zu vergleichen und die Betriebsparameter der Zelleinheit 12 auf die dem ermittelten Brennwert zugeordneten Soll-Betriebsparameter zu regeln.

Bevorzugt ist die Steuer- und/oder Regeleinheit 16 dazu eingerichtet, zu einer Erstellung von Kalibrierungsparametern, insbesondere von Kalibrierungskurven, Korrelationen der Änderung der elektrischen Kenngröße mit einer Modulation eines Volumenstroms von Brennstoffen unterschiedlicher Brennwerte durch die Zelleinheit 12 zu speichern. Insbesondere ist die Steuer- und/oder Regeleinheit 16 dazu eingerichtet, die Korrelationen der Änderung der elektrischen Kenngröße mit einer Modulation eines Volumenstroms von Brennstoffen unterschiedlicher Brennwerte durch die Zelleinheit 12 in der Speichereinheit 40 der Steuer-und/oder Regeleinheit 16 zu speichern. Vorzugsweise ist die Steuer- und/oder Regeleinheit 16 dazu eingerichtet, die Kalibrierungsparameter zu ermitteln, insbesondere mittels einer Erfassung der Korrelationen der Änderung der elektrischen Kenngröße mit einer Modulation eines Volumenstroms von Brennstoffen unterschiedlicher Brennwerte durch die Zelleinheit 12. Alternativ oder zusätzlich ist denkbar, dass die Steuer- und/oder Regeleinheit 16 dazu eingerichtet ist, die Korrelationen der Änderung der elektrischen Kenngröße mit einer Modulation eines Volumenstroms von Brennstoffen unterschiedlicher Brennwerte durch die Zelleinheit 12 zu einer Speicherung zu empfangen, insbesondere über die Kommunikationseinheit von einem Cloud-Server, einem externen Speichermedium o. dgl., oder dass die Korrelationen der Änderung der elektrischen Kenngröße mit einer Modulation eines Volumenstroms von Brennstoffen unterschiedlicher Brennwerte durch die Zelleinheit 12 während eines Herstellungsprozesses der Brennstoffzellenvorrichtung 10 von der Steuer- und/oder Regeleinheit 16 gespeichert werden.

Bevorzugt umfasst die Brennstoffzellenvorrichtung 10 zumindest eine Durchflusssensoreinheit 20, die dazu eingerichtet ist, zumindest zur Erstellung der Kalibrierungsparameter den Volumenstrom durch die Zelleinheit 12, insbesondere in einem Betriebsbereich der Zelleinheit 12, zu erfassen. Vorzugsweise ist die Durchflusssensoreinheit 20 dazu eingerichtet, den Volumenstrom des Brennstoffs durch die Brennstoffleitung 30 zu erfassen. Insbesondere ist die Durchflusssensoreinheit 20 signalübertragungstechnisch, insbesondere elektrisch, mit der Steuer- und/oder Regeleinheit 16 verbunden. Die Durchflusssensoreinheit 20 kann insbesondere als ein optischer Strömungssensor, als ein mechanischer Strömungssensor, als ein elektrischer Strömungssensor oder als ein anderer, einem Fachmann als sinnvoll erscheinender Strömungssensor ausgebildet sein. Insbesondere ist die Durchflusssensoreinheit 20 dazu eingerichtet, eine Mehrzahl von unterschiedlichen Volumenströmen unterschiedlicher Brennstoffe mit unterschiedlichen Brennwerten zu erfassen. Vorzugsweise ist die Elektrosensoreinheit 14 dazu eingerichtet, zur Erstellung der Kalibrierungsparameter eine Mehrzahl von unterschiedlichen Werten der elektrischen Kenngröße in Abhängigkeit von den unterschiedlichen Volumenströmen der unterschiedlichen Brennstoffe mit den unterschiedlichen Brennwerten zu erfassen. Insbesondere ist die Steuer-und/oder Regeleinheit 16 dazu eingerichtet, die von der Durchflusssensoreinheit 20 und von der Elektrosensoreinheit 14 erfassten Werte zu einer Erstellung der Kalibrierungsparameter als Korrelationen der Änderung der elektrischen Kenngröße mit einer Modulation eines Volumenstroms von Brennstoffen unterschiedlicher Brennwerte durch die Zelleinheit 12 zu speichern.

Bevorzugt sind die Steuer- und/oder Regeleinheiten 16 der Brennstoffzellenvorrichtungen 10, insbesondere des Brennstoffzellensystems 22, dazu eingerichtet, Modulationen von Volumenströmen des Brennstoffs in jeweils zwei Brennstoffzellenvorrichtungen 10 gegenteilig zueinander einzustellen. Insbesondere sind die Steuer- und/oder Regeleinheiten 16 der Brennstoffzellenvorrichtungen 10 untereinander signalübertragungstechnisch, insbesondere elektrisch, verbunden. Alternativ ist vorstellbar, dass das Brennstoffzellensystem 22 eine einzelne Steuer-und/oder Regeleinheit 16 umfasst, die dazu eingerichtet ist, sämtliche Komponenten, insbesondere Zelleinheiten 12, der Brennstoffzellenvorrichtungen 10 des Brennstoffzellensystems 22 zu steuern und/oder zu regeln. Vorzugsweise ist die Steuer- und/oder Regeleinheit 16 der Brennstoffzellenvorrichtung 10 dazu eingerichtet, zu einer Modulation eines Volumenstroms eines Brennstoffs durch die Zelleinheit 12 der Brennstoffzellenvorrichtung 10 den Volumenstrom des Brennstoffs um einen vorgegebenen Wert zu erhöhen. Vorzugsweise ist eine Steuer-und/oder Regeleinheit einer weiteren Brennstoffzellenvorrichtung (hier nicht dargestellt) dazu eingerichtet, zu einer Modulation eines Volumenstroms des Brennstoffs durch eine Zelleinheit der weiteren Brennstoffzellenvorrichtung den Volumenstrom des Brennstoffs zu reduzieren, insbesondere um denselben vorgegebenen Wert.

Figur 3 zeigt ein, insbesondere ein erstes, Diagramm 42 zur Illustration eines Einflusses unterschiedlicher Brennwerte auf die elektrische Kenngröße in einer schematischen Darstellung. Insbesondere weist das erste Diagramm 42 eine Abszissenachse 44 auf, auf der ein Volumenstrom eines Brennstoffs durch die Zelleinheit 12, insbesondere durch die Brennstoffleitung 30, angetragen ist. Insbesondere weist das erste Diagramm 42 eine Ordinatenachse 46 auf, auf der eine elektrische Spannung der Zelleinheit 12 angetragen ist.

In dem ersten Diagramm 42 ist insbesondere eine erste Brennwertkurve 48 dargestellt, die die elektrische Spannung der Zelleinheit 12 in Abhängigkeit von einem Volumenstrom eines ersten Brennstoffs mit einem ersten Brennwert durch die Zelleinheit 12 beschreibt. Insbesondere beschreibt eine Steigung der ersten Brennwertkurve 48 die elektrische Kenngröße, insbesondere den elektrischen Gleichstromwiderstand, der Zelleinheit 12 für den ersten Brennstoff mit dem ersten Brennwert. Die Steigung der ersten Brennwertkurve 48 ist insbesondere mittels eines ersten Steigungsdreiecks 50 dargestellt. In dem ersten Diagramm 42 ist insbesondere eine zweite Brennwertkurve 52 dargestellt, die die elektrische Spannung der Zelleinheit 12 in Abhängigkeit von einem Volumenstrom eines zweiten Brennstoffs mit einem zweiten Brennwert, der höher ist als der erste Brennwert, durch die Zelleinheit 12 beschreibt. Insbesondere beschreibt eine Steigung der zweiten Brennwertkurve 52, die größer ist als die Steigung der ersten Brennwertkurve 48, die elektrische Kenngröße, insbesondere den elektrischen Gleichstromwiderstand, der Zelleinheit 12 für den zweiten Brennstoff mit dem zweiten Brennwert. Die Steigung der zweiten Brennwertkurve 52 ist insbesondere mittels eines zweiten Steigungsdreiecks 54 dargestellt. In dem ersten Diagramm 42 ist insbesondere eine dritte Brennwertkurve 56 dargestellt, die die elektrische Spannung der Zelleinheit 12 in Abhängigkeit von einem Volumenstrom eines dritten Brennstoffs mit einem dritten Brennwert, der höher ist als der erste und der zweite Brennwert, durch die Zelleinheit 12 beschreibt. Insbesondere beschreibt eine Steigung der dritten Brennwertkurve 56, die größer ist als die Steigungen der ersten Brennwertkurve 48 und der zweiten Brennwertkurve 52, die elektrische Kenngröße, insbesondere den elektrischen Gleichstromwiderstand, der Zelleinheit 12 für den dritten Brennstoff mit dem dritten Brennwert. Die Steigung der dritten Brennwertkurve 56 ist insbesondere mittels eines dritten Steigungsdreiecks 58 dargestellt.

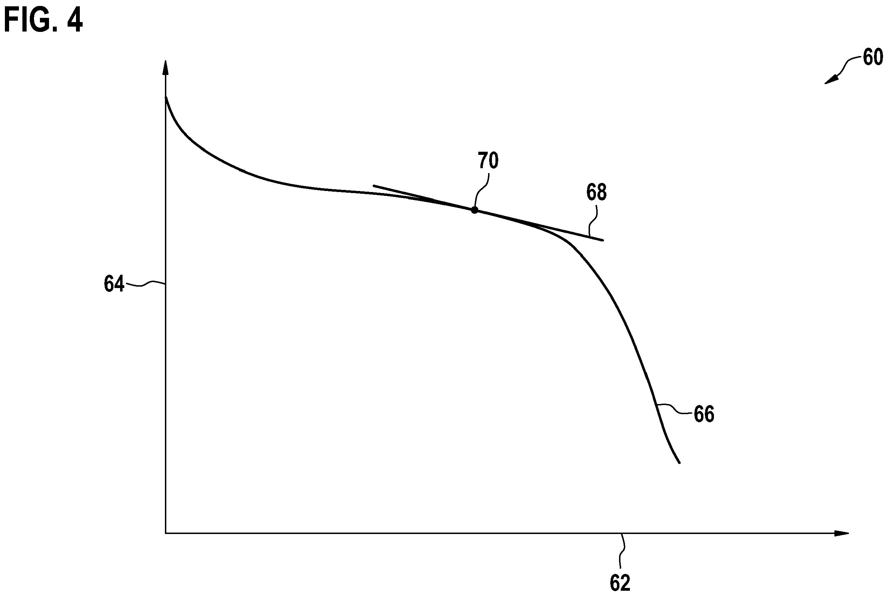

Figur 4 zeigt ein, insbesondere zweites, Diagramm 60 zur Illustration der elektrischen Kenngröße in einer schematischen Darstellung. Insbesondere weist das zweite Diagramm 60 eine Abszissenachse 62 auf, auf der eine elektrische Stromstärke der Zelleinheit 12 angetragen ist. Insbesondere weist das zweite Diagramm 60 eine Ordinatenachse 64 auf, auf der eine elektrische Spannung der Zelleinheit 12 angetragen ist. In dem zweiten Diagramm 60 ist insbesondere eine Strom-Spannungs-Kennlinie 66 der Zelleinheit 12 dargestellt. Vorzugsweise beschreibt eine, insbesondere mittels einer Linie 68 dargestellte, Steigung der Strom-Spannungs-Kennlinie 66 an einem Betriebspunkt 70 der Zelleinheit 12 die elektrische Kenngröße, insbesondere den elektrischen Gleichstromwiderstand, der Zelleinheit 12.

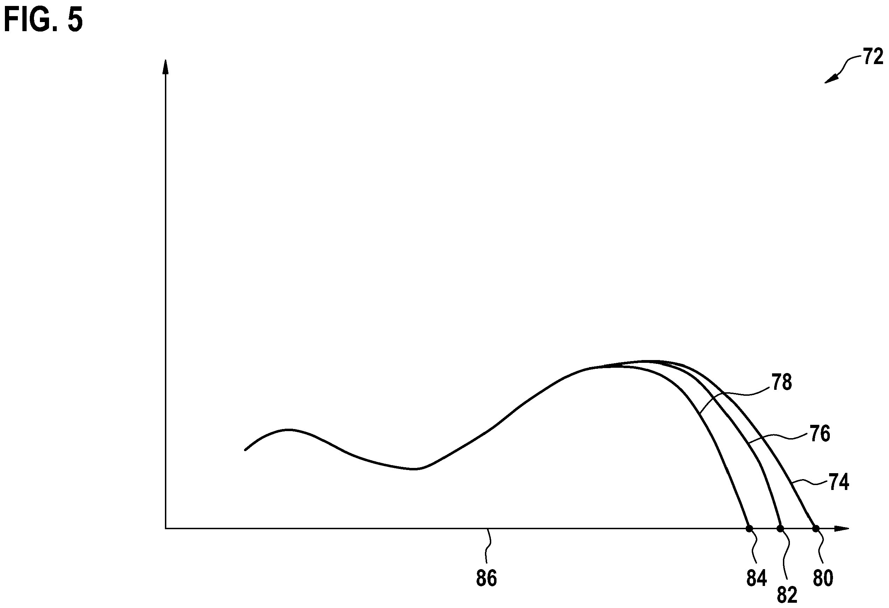

Figur 5 zeigt ein, insbesondere drittes, Diagramm 72 zur Illustration eines Einflusses unterschiedlicher Volumenströme eines Brennstoffs auf die elektrische Kenngröße in einer schematischen Darstellung. Das dritte Diagramm 72 zeigt insbesondere ein elektrochemisches Impedanzspektrum der Zelleinheit 12. Insbesondere sind in dem dritten Diagramm 72 unterschiedliche Kurven 74, 76, 78 dargestellt, die unterschiedliche Volumenströme des Brennstoffs durch die Zelleinheit 12, insbesondere durch die Brennstoffleitung 30, beschreiben. Insbesondere markieren Schnittpunkte 80, 82, 84 der Kurven 74, 76, 78 mit einer Abszissenachse 86 des dritten Diagramms 72 die elektrische Kenngröße, insbesondere den elektrischen Gleichstromwiderstand, der Zelleinheit 12 in Abhängigkeit von den unterschiedlichen Volumenströmen des Brennstoffs durch die Zelleinheit 12, insbesondere durch die Brennstoffleitung 30.

Im Folgenden wird ein Verfahren zum Betrieb einer Brennstoffzellenvorrichtung, insbesondere der vorgenannten Brennstoffzellenvorrichtung 10, beschrieben, insbesondere anhand der Figuren 1 bis 5. Bevorzugt wird in zumindest einem Verfahrensschritt in Abhängigkeit von einer Änderung zumindest einer elektrischen Kenngröße zumindest einer, insbesondere der vorgenannten, Zelleinheit 12 der Brennstoffzellenvorrichtung 10 ein Brennwert eines Brennstoffs ermittelt. Hinsichtlich weiterer Verfahrensschritte des Verfahrens zum Betrieb der Brennstoffzellenvorrichtung 10 darf auf die vorhergehende Beschreibung der Brennstoffzellenvorrichtung 10 verwiesen werden, da diese Beschreibung analog auch auf das Verfahren zu lesen ist und somit alle Merkmale hinsichtlich der Brennstoffzellenvorrichtung 10 auch in Bezug auf das Verfahren zum Betrieb der Brennstoffzellenvorrichtung 10 als offenbart gelten.

## Patentansprüche

1. Brennstoffzellenvorrichtung, insbesondere Festoxidbrennstoffzellenvorrichtung, mit zumindest einer Zelleinheit (12) zu einer Gewinnung von elektrischer Energie aus zumindest einem Brennstoff, insbesondere zumindest einem Brenngas, mit zumindest einer Elektrosensoreinheit (14), insbesondere zumindest einer Widerstandssensoreinheit, die dazu eingerichtet ist, zumindest eine elektrische Kenngröße, insbesondere einen elektrischen Gleichstromwiderstand, der Zelleinheit (12) zu erfassen, und mit zumindest einer Steuer- und/oder Regeleinheit (16), die dazu eingerichtet ist, zumindest teilautomatisch Betriebsparameter der Zelleinheit (12) einzustellen, **dadurch gekennzeichnet, dass** die Steuer- und/oder Regeleinheit (16) dazu eingerichtet ist, in Abhängigkeit von einer, insbesondere von der Elektrosensoreinheit (14) erfassten, Änderung der elektrischen Kenngröße einen Brennwert des Brennstoffs zu ermitteln.

2. Brennstoffzellenvorrichtung nach Anspruch 1, **dadurch gekennzeichnet, dass** die Steuer- und/oder Regeleinheit (16) dazu eingerichtet ist, in Abhängigkeit von einer Korrelation der Änderung der elektrischen Kenngröße mit einer Modulation eines Volumenstroms des Brennstoffs durch die Zelleinheit (12) den Brennwert des Brennstoffs zu ermitteln.

3. Brennstoffzellenvorrichtung nach Anspruch 1 oder 2, **gekennzeichnet durch** zumindest eine Dosiereinheit (18), die dazu vorgesehen ist, einen Volumenstrom des Brennstoffs durch die Zelleinheit (12) einzustellen, wobei die Steuer- und/oder Regeleinheit (16) dazu eingerichtet ist, die Dosiereinheit (18) zu einer gezielten Modulation des Volumenstroms um einen vorgegebenen Wert anzusteuern.

4. Brennstoffzellenvorrichtung nach Anspruch 3, **dadurch gekennzeichnet, dass** die Steuer- und/oder Regeleinheit (16) dazu eingerichtet ist, die Änderung der elektrischen Kenngröße in Abhängigkeit von der gezielten Modulation des Volumenstroms zu einer Ermittlung des Brennwerts des Brennstoffs mit Kalibrierungsparametern, insbesondere mit Kalibrierungskurven, zu vergleichen.

5. Brennstoffzellenvorrichtung nach einem der vorhergehenden Ansprüche, **dadurch gekennzeichnet, dass** die Steuer- und/oder Regeleinheit (16) dazu eingerichtet ist, die Betriebsparameter der Zelleinheit (12) in Abhängigkeit von dem ermittelten Brennwert des Brennstoffs einzustellen.

6. Brennstoffzellenvorrichtung nach einem der vorhergehenden Ansprüche, **dadurch gekennzeichnet, dass** die Steuer- und/oder Regeleinheit (16) dazu eingerichtet ist, zu einer Erstellung von Kalibrierungsparametern, insbesondere von Kalibrierungskurven, Korrelationen der Änderung der elektrischen Kenngröße mit einer Modulation eines Volumenstroms von Brennstoffen unterschiedlicher Brennwerte durch die Zelleinheit (12) zu speichern.

7. Brennstoffzellenvorrichtung nach Anspruch 6, **gekennzeichnet durch** zumindest eine Durchflusssensoreinheit (20), die dazu eingerichtet ist, zumindest zur Erstellung der Kalibrierungsparameter den Volumenstrom durch die Zelleinheit (12), insbesondere in einem Betriebsbereich der Zelleinheit (12), zu erfassen.

8. Brennstoffzellensystem mit einer Mehrzahl von Brennstoffzellenvorrichtungen nach einem der vorhergehenden Ansprüche.

9. Brennstoffzellensystem nach Anspruch 8, **dadurch gekennzeichnet, dass** die Steuer- und/oder Regeleinheiten (16) der Brennstoffzellenvorrichtungen dazu eingerichtet sind, Modulationen von Volumenströmen des Brennstoffs in jeweils zwei Brennstoffzellenvorrichtungen gegenteilig zueinander einzustellen.

10. Verfahren zum Betrieb einer Brennstoffzellenvorrichtung, insbesondere einer Brennstoffzellenvorrichtung nach einem der Ansprüche 1 bis 7, **dadurch gekennzeichnet, dass** in zumindest einem Verfahrensschritt in Abhängigkeit von einer Änderung zumindest einer elektrischen Kenngröße zumindest einer Zelleinheit (12) der Brennstoffzellenvorrichtung ein Brennwert eines Brennstoffs ermittelt wird.
